# FASCICULE DE BREVET EUROPEEN

(11) **EP 3 421 098 B1**
(45) Date de publication et mention de la délivrance du brevet: **12.07.2023**
(21) Numéro de dépôt: 18178390.3
(22) Date de dépôt: 19.06.2018
(51) Int. Cl.: A62B 1/14, F16B 45/00

(54) **DESCENDEUR AMELIORE**
VERBESSERTES ABSEILGERÄT
IMPROVED DESCENDER

(30) Priorité: 26.06.2017 FR 1755851
(43) Date de publication de la demande: 02.01.2019
(73) Titulaire: Zedel, 38920 Crolles (FR)
(72) Inventeur: MAURICE, Alain, 38660 Saint Hilaire du Touvet (FR); QUILLARD, Christophe, 38320 Eybens (FR)
(74) Mandataire: Talbot, Alexandre

(56) Documents cités:
- CN-U- 202 892 685
- US-A- 4 723 634
- Petzl: "Belay-devices--descenders/PIRANA", , 1 janvier 2017 (2017-01-01), XP055458366, Extrait de l'Internet: URL:http://web.archive.org/web/20170101162 419/https://www.petzl.com/US/en/Sport/Bela y-devices--descenders/PIRANA#.WqZrcGcpoYs [extrait le 2018-03-12]

## Description

### Domaine technique de l'invention

L'invention est relative à un descendeur sur corde.

### État de la technique

Dans le domaine de l'escalade, de l'alpinisme et plus particulièrement du canyoning, il est nécessaire de descendre le long d'une corde de manière maitrisée. Pour bien maitriser sa descente et notamment sa vitesse, l'utilisateur doit principalement maitriser le frottement qui existe entre la corde et le descendeur.

La force de frottement qui existe entre la corde et le descendeur est fonction de plusieurs paramètres et notamment l'état de la corde, c'est-à-dire son taux d'usure, la quantité d'eau contenue dans la corde et/ou la qualité de surface de la corde ainsi que son diamètre. Afin d'avoir un descendeur polyvalent, il est particulièrement avantageux d'avoir un descendeur qui permet facilement de moduler la force de frottement.

De très nombreuses configurations de descendeur existent. Par exemple, il est connu de former des descendeurs à came. Un tel produit est commercialisé par la demanderesse sous la dénomination « Grigri ». Dans ce cas de figure, la corde passe à l'intérieur du descendeur entre la came mobile et une paroi opposée. La distance qui sépare la came et la paroi détermine la plage d'utilisation du diamètre de la corde. L'utilisateur module la force de frottement en actionnant la poignée.

Cette typologie de descendeur est généralement configurée pour bloquer la corde lorsque l'utilisateur lâche la poignée. Une telle configuration peut être dangereuse lorsque l'utilisateur est coincé sous une cascade.

Il est donc avantageux d'utiliser un descendeur monolithique également connu sous le nom de 8 ou huit. Un huit conventionnel comporte deux anneaux. Un premier anneau est destiné à être fixé à un harnais par l'intermédiaire d'un mousqueton ou un autre connecteur. Le deuxième anneau est utilisé pour faire passer un brin de corde.

Les deux anneaux sont séparés par une tige et la corde entre dans le deuxième anneau passe autour de la tige et ressort par le deuxième anneau.

Si l'utilisateur souhaite se bloquer le long de la corde, il est alors nécessaire d'utiliser un bloqueur ce qui nécessite un outil supplémentaire. Si la nécessité de bloquer la corde apparait en cours de descente, il faut s'arrêter et installer le bloqueur ce qui nécessite au moins une main de libre et introduit un risque d'accident non négligeable. En alternative, le bloqueur peut être installé au début du rappel avec le risque de rester bloqué sous une cascade car le bloqueur est configuré pour boquer la corde et doit être désactivé en continu.

Avec un huit conventionnel, le frottement introduit par le passage de la corde est fixé par le cheminement de la corde. Afin de moduler le niveau de frottement, la forme du huit a été modifiée, l'architecture arrondie du huit conventionnel a été remplacée par une architecture plus anguleuse. Il est également proposé de rajouter une pluralité de cornes, c'est-à-dire une pluralité de zones en saillie.

Les cornes sont recourbées vers l'intérieur du huit afin d'autoriser un glissement de la corde lors de la descente le long de la corde mais en empêchant que le cheminement de la corde soit modifié sans intervention de l'utilisateur. Un exemple de réalisation peut être matérialisé par un produit de la société Edelrid commercialisé sous la dénomination Hannibal. Il existe un produit sensiblement équivalent commercialisé par la société Sterling sous la dénomination ATS Belay. Une architecture légèrement différente est présentée par la société Conterra avec le descendeur commercialisé sous la dénomination Scarab. Ces différentes solutions ne sont pas satisfaisantes car la modulation de la force de frottement n'est pas adaptée à toutes les pratiques et il n'est pas possible de bloqueur aisément la corde sans un bloqueur additionnel.

Une autre solution pour la modulation du frottement est présentée par un huit qui comporte un ou plusieurs organes en saillie qui permettent de définir un ou plusieurs chemins de défilement additionnel et donc du frottement supplémentaire. Ces organes en saillie permettent d'autoriser le glissement de la corde lors de la descente et le maintien du cheminement de la corde à travers le descendeur. Dans cette catégorie de produit, il est possible de citer les descendeurs commercialisés par la société Kong sous la dénomination Oka ou sous la dénomination Big 8, le descendeur commercialisé par la société Rock Exotica Equipment sous la dénomination MiniEight ou encore le descendeur commercialisé par la société Petzl sous la dénomination Pirana. Un tel produit est également présenté dans le document US 4,723,634.

Tous ces descendeurs permettent de moduler la force de frottement lors de la descente. Avec le temps, des clés de blocage ont été développées de manière à bloquer l'utilisateur lors de sa descente. Cependant, ces clés de blocage sont relativement techniques car elles nécessitent de se placer dans un cheminement de corde particulier et de former une ou plusieurs boucles de cordes qu'il faut installer judicieusement pour obtenir le blocage de la corde en toute sécurité. Des solutions existent pour bloquer l'utilisateur en cours de descente, mais elles demandent un niveau technique élevé.

Il est également connu des documents FR2887463 et US2010/031479 de former un descendeur de type huit qui est modifié de manière à former un frein autobloquant. Cette solution n'est pas satisfaisante, car en cas de problème l'utilisateur peut se retrouver coincé dans un endroit dangereux, par exemple sous une cascade.

### Objet de l'invention

Un objet de l'invention consiste à prévoir un descendeur qui est plus performant que les descendeurs de l'art antérieur car il permet de définir des positions de blocage faciles à réaliser.

Le descendeur est défini par la revendication 1.

Dans un développement, l'échancrure présente une forme de V à largeur continument décroissante depuis l'ouverture de l'échancrure jusqu'à la zone de blocage.

De manière avantageuse, l'échancrure est formée par une paroi latérale commune avec le deuxième anneau.

Il est également avantageux de prévoir que la paroi latérale soit convexe selon une direction allant de l'intérieur du deuxième anneau vers l'échancrure.

Dans un autre développement, l'autre paroi latérale de l'échancrure est convexe selon une direction allant de l'intérieur du deuxième anneau vers l'échancrure.

Dans un mode de réalisation particulier, le descendeur comporte une extrémité correspondant au point le plus éloigné du premier anneau, l'extrémité étant disposée dans premier demi-espace et l'ouverture de l'échancrure étant disposée dans un second demi-espace, le premier demi-espace étant séparé du second demi-espace par un plan passant par le premier anneau et le sommet du descendeur.

De manière avantageuse, le premier anneau et le deuxième anneau appartiennent à un même plan comprenant la surface fermée du deuxième anneau. Le descendeur comporte une première tige en saillie terminée par un crochet transversal, la première tige s'étendant depuis le premier anneau en direction de l'échancrure à l'intérieur dudit plan et le crochet transversal faisant saillie dudit plan.

Il est encore avantageux de prévoir que la première tige soit terminée par un crochet latéral inclus dans ledit plan et dirigé pour s'éloigner de l'échancrure.

Dans un mode de réalisation préférentiel, le descendeur comporte une deuxième tige terminée par un crochet latéral inclus dans ledit plan, la deuxième tige s'étendant depuis le premier anneau dans une direction opposée à la première tige à l'intérieur dudit plan et le crochet latéral étant refermé vers le deuxième anneau.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un descendeur selon l'invention en vue de face,
- la figure 2 représente, de manière schématique, un descendeur selon l'invention vue de trois quart,
- la figure 3 représente, de manière schématique, un descendeur selon l'invention en vue de dessus,
- la figure 4 représente, de manière schématique, un descendeur selon l'invention associé à un mousqueton en vue de profil,

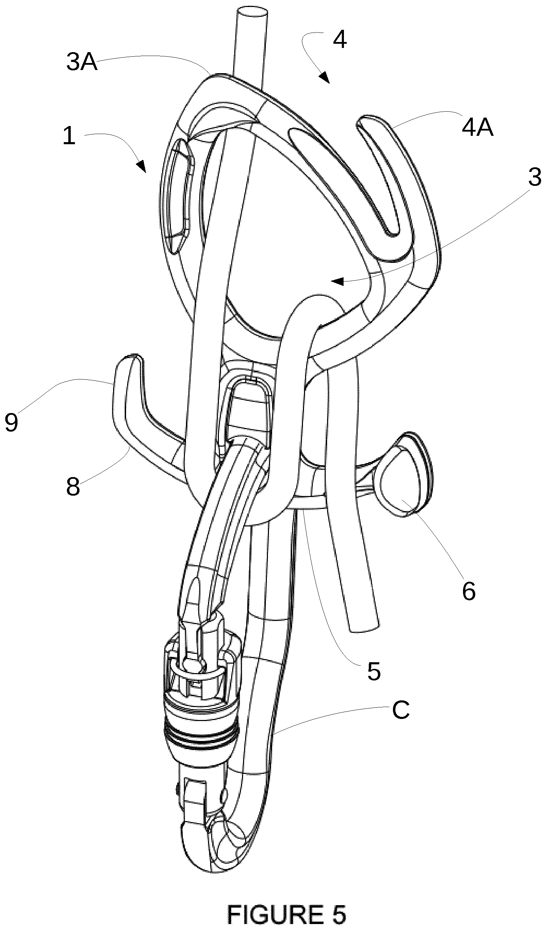

- la figure 5 représente, de manière schématique, un descendeur selon l'invention associé à un mousqueton en vue de profil avec une corde installée dans le descendeur et le mousqueton.

### Description détaillée

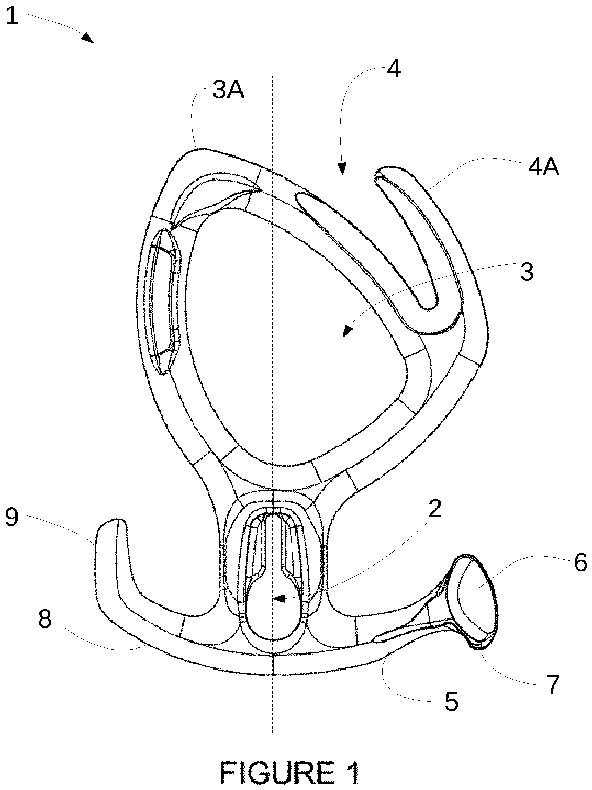

Comme illustré à la figure 1, le descendeur 1 comprend un premier anneau 2 destiné à être fixé à un harnais par l'intermédiaire d'un connecteur C. Le descendeur 1 comporte également un deuxième anneau 3 qui est distinct du premier anneau 2. Le deuxième anneau 3 est défini au moyen d'un périmètre fermé. De manière avantageuse, le deuxième anneau 3 définit un trou traversant qui est plus grand que le trou traversant défini par le premier anneau 2.

Le descendeur 1 comporte une échancrure 4 disposée hors du deuxième anneau 3 et du premier anneau 2 et à l'extérieur du périmètre fermé. L'échancrure 4 est formée à distance et hors du premier anneau 2 et du deuxième anneau 3. L'échancrure 4 est complètement séparée des deux anneaux 2 et 3 par une paroi.

De cette manière, l'échancrure 4 est dissociée du premier anneau 2 ce qui permet un accrochage aisé du descendeur au harnais au moyen d'un connecteur conventionnel. L'échancrure 4 est dissociée du deuxième anneau 3 afin d'empêcher la réalisation d'une fonction d'autoblocage du brin de corde qui passe dans le deuxième anneau. La fonction d'autoblocage peut être dangereuse lorsque l'utilisateur est sous une cascade d'eau.

L'échancrure 4 possède deux parois latérales dont la distance de séparation est variable selon la direction d'insertion d'un brin de corde. De cette manière, l'insertion du brin de corde est aisée dans l'échancrure 4 et le brin de corde peut se déplacer jusqu'à atteindre une zone de blocage de l'échancrure 4 où le brin de corde est coincé. Dans cette configuration, un défilement du brin de corde est impossible selon une direction perpendiculaire à l'axe d'introduction dans l'échancrure 4 et une force doit être appliquée pour faire ressortir le brin de corde hors de la zone de blocage.

Cette configuration est particulièrement avantageuse, car le blocage de la corde est choisi par l'utilisateur et il peut être réalisé sans l'utilisation d'un équipement additionnel. Il suffit à l'utilisateur d'utiliser le brin de corde qui se trouve dans sa main inférieure (à droite sur la figure 1) et de remonter le brin de corde pour qu'il s'insère dans l'échancrure 4. L'utilisateur manipule le brin de corde qui est sortie du deuxième anneau 3.

Le blocage de la corde peut être réalisé sans que l'utilisateur ne libère le brin inférieur de la corde et sans qu'il utilise son autre main. Cette configuration est donc particulièrement simple d'utilisation. Il apparait également que cette architecture autorise également un déblocage avec une seule main qui reste toujours en contact du brin inférieur pendant toute l'opération de déblocage.

De cette manière, les opérations de blocage et de déblocage de la corde peuvent être réalisées en ayant toujours un point de frottement de la corde en sortie du deuxième anneau 3 ce qui assure une valeur minimale de frottement entre la corde et le descendeur.

L'échancrure 4 est configurée pour autoriser l'insertion du brin de corde sans passer une nouvelle fois dans le deuxième anneau 3 ce qui permet un blocage aisé de la corde. Ainsi, le brin de corde qui s'insère dans l'échancrure 4 se déplace hors du trou défini par le deuxième anneau 3.

Comme indiqué plus haut, l'échancrure 4 est configurée pour bloquer le brin de corde inséré dans l'échancrure 4. L'échancrure 4 définit une zone de blocage avec une zone où la distance entre les deux parois latérales de l'échancrure 4 sont inférieures au diamètre de la corde ce qui impose une déformation de la corde pour assurer le blocage.

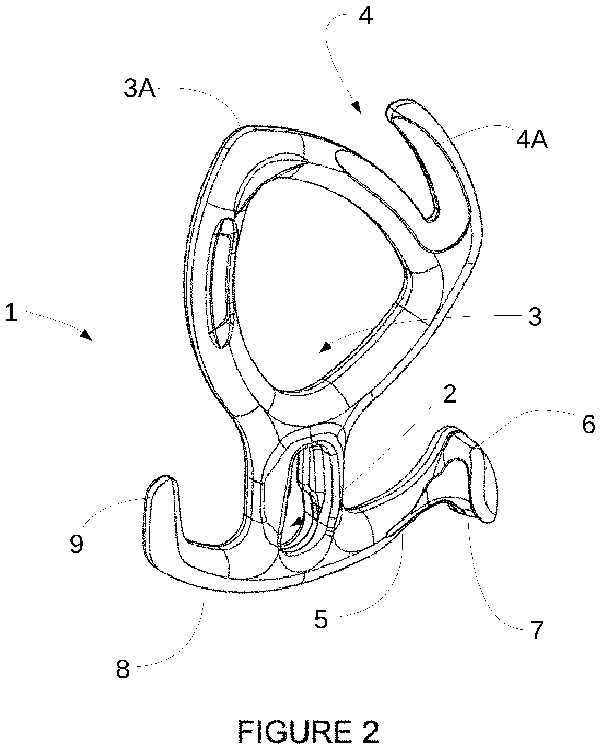

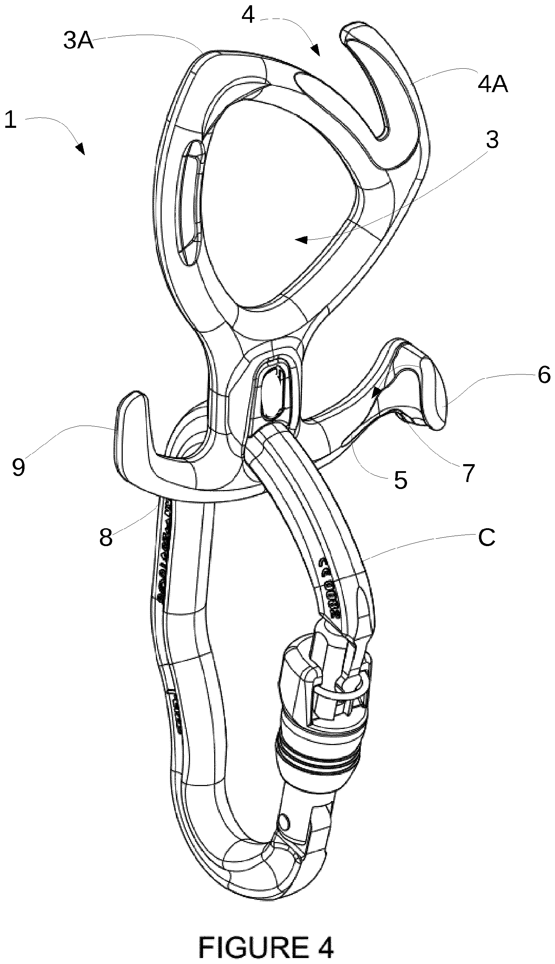

Dans un mode de réalisation avantageux et illustré aux figures 1 à 4, l'échancrure 4 présente une forme de V à largeur décroissante depuis l'ouverture de l'échancrure 4 jusqu'à la zone de blocage. De manière préférentielle, la largeur de l'échancrure 4 est continument décroissante jusqu'à la zone de blocage afin de réduire la surface occupée par l'échancrure 4 et s'adapter plus facilement aux différents diamètres de corde. Dans un mode de réalisation avantageux, la distance minimale de la zone de blocage est égale à 7,5mm afin de bloquer des cordes dont le diamètre est supérieur ou égal à 8mm. Selon le diamètre de la corde utilisée, la position de la zone de blocage de l'échancrure 4 se déplace. Plus le diamètre de la corde est important et plus la zone de blocage est proche de l'ouverture d'entrée.

L'évolution décroissante de la largeur de l'échancrure 4 est observée depuis l'ouverture vers le fond de la rainure.

Dans le mode de réalisation illustré, l'échancrure 4 est orientée obliquement. L'orientation de l'échancrure 4 comporte une première composante qui prévoit que l'échancrure 4 est orientée vers le bas et vers l'extérieur du descendeur lorsque l'on souhaite bloquer le brin de corde. En d'autres termes, la décroissance de la largeur est observée selon une direction qui part depuis le sommet du descendeur vers le pied du descendeur.

Il est particulièrement avantageux de prévoir que l'échancrure 4 est orientée vers le bas car cela permet de profiter du poids du brin de corde inférieur, c'est-à-dire du poids de brin de corde se trouvant à droite du descendeur sur la figure 1 comme force qui incite le brin de corde à rester dans l'échancrure 4. Cette configuration est plus avantageuse qu'une solution où l'échancrure 4 est orientée vers le haut car le déblocage est facilité, mais cela impose de mieux enfoncer le brin de corde dans la zone de blocage. Cette configuration est également plus avantageuse qu'une solution où la direction d'insertion dans l'échancrure 4 ne comporte qu'une composante horizontale car l'insertion de la corde est moins facile.

Il est également avantageux de prévoir que le blocage de la corde se réalise lorsque la corde se dirige vers l'extérieur du descendeur car cela correspond à la main qui tient le brin inférieur de la corde. Il est alors plus facile pour l'utilisateur de réaliser le blocage de la corde en cherchant à s'éloigner du descendeur plutôt qu'en se rapprochant du descendeur. De cette manière, l'utilisateur acquiert plus rapidement une position qui permet un serrage de la corde.

En utilisation, le brin de corde supérieur quitte le descendeur par le sommet du deuxième anneau 3 qui correspond sensiblement au sommet 3A du descendeur ou à proximité immédiate du descendeur. Afin d'augmenter la surface utile du descendeur, il est particulièrement avantageux de réaliser un descendeur qui n'est pas symétrique selon le plan sagittal de l'utilisateur. Il est particulièrement avantageux de prévoir que le plan qui passe par le point de connexion entre le connecteur et le sommet 3A du deuxième anneau 3 définit deux demi-espaces. Un demi-espace montant correspond au brin de corde montant, c'est-à-dire à la partie de la corde qui est située entre le connecteur et le point de fixation de la corde. L'autre demi-espace, également demi-espace descendant correspond au brin de corde descendant ou inférieur, c'est-à-dire à la partie de la corde qui est située entre le connecteur et l'extrémité inférieure de la corde. Le premier demi-espace est séparé du second demi-espace passant par un plan qui passe par le premier anneau 2 et le sommet du deuxième anneau 3.

Il est particulièrement avantageux de prévoir que le descendeur présente une surface plus importante dans le demi-espace descendant que dans le demi-espace montant ce qui permet d'intégrer des cheminements de corde supplémentaires pour intégrer du freinage additionnel et facilite l'insertion de la corde dans l'échancrure 4.

Il est particulièrement avantageux de réaliser l'échancrure 4 dans le demi-espace descendant car l'utilisateur n'est pas gêné par le brin de corde montant ce qui permet une utilisation améliorée du descendeur. La main de l'utilisateur n'a pas besoin de passer entre le buste et le brin de corde montant.

Dans un mode de réalisation avantageux, l'échancrure 4 est formée par une paroi latérale commune avec le deuxième anneau 3. La paroi latérale est convexe depuis l'intérieur du deuxième anneau 3 vers l'échancrure 4. Ce mode de réalisation est plus avantageux qu'une configuration où la paroi est concave ou droite car le blocage du brin de corde est mieux maintenu.

De cette manière, l'insertion du brin de corde dans l'échancrure 4 est facilitée car la paroi externe du deuxième anneau 3 est dans le prolongement de la paroi interne de l'échancrure 4. L'utilisateur peut relever le brin de corde descendant jusqu'à atteindre le brin de corde montant et ensuite, il suffit de descendre le long du brin de corde montant jusqu'à venir en contact de la paroi du descendeur 1 et suivre la paroi externe du descendeur 1 pour arriver à la zone de blocage.

L'utilisation d'une paroi externe convexe est particulièrement avantageuse car le glissement du brin de corde le long du descendeur 1 est amélioré et facilite le blocage dans l'échancrure 4.

Il est également intéressant de prévoir que l'autre paroi latérale 4A de l'échancrure 4 est convexe depuis l'intérieur du deuxième anneau 3 vers l'échancrure 4. De cette manière, la forme générale externe de la partie supérieure du descendeur est moins susceptible de s'accrocher à des éléments externes.

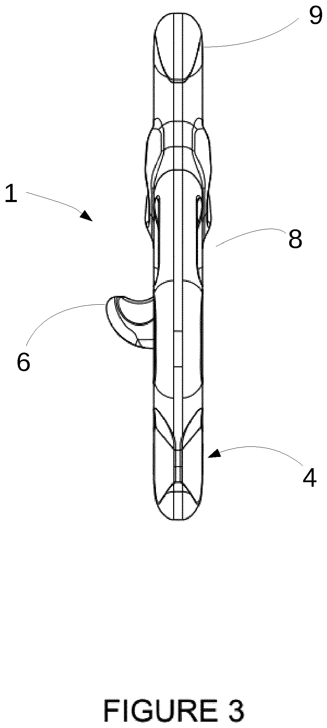

Comme cela est illustré à la figure 3, il est avantageux de prévoir que le premier anneau 2 et le deuxième anneau 3 appartiennent à un même plan. Le descendeur 1 est sensiblement plat, il présente une épaisseur constante ou sensiblement constante pour former le premier anneau 2 et le deuxième anneau 3. De manière avantageuse, il est possible de définir un plan de coupe qui passe par le premier anneau 2, le deuxième anneau 3 et l'échancrure 4. Dans ce plan de coupe, le premier anneau 2 est un anneau fermé et le deuxième anneau 3 est un anneau fermé. Le plan de coupe passe également par les deux parois latérales de l'échancrure 4. De manière particulièrement avantageuse, le plan de coupe est un plan de symétrie pour le premier anneau 2, le deuxième anneau 3 et l'échancrure 4.

Afin de définir plusieurs cheminements différents du brin de corde dans le descendeur 1 et ainsi moduler la force de freinage, il est avantageux d'utiliser une première tige 5 en saillie terminée par un crochet transversal 6, la première tige 5 s'étendant depuis le premier anneau 2 en direction de l'échancrure 4. La première tige 5 s'éloigne du plan séparant le demi-espace montant et le demi-espace descendant lorsque l'on se dirige vers le crochet. Le crochet est dirigé vers l'utilisateur.

Dans le mode de réalisation illustré, la première tige 5 est dans le même plan que le premier anneau 2 et le deuxième anneau 3 jusqu'au crochet 6, mais un léger décalage est également possible sans que cela augmente considérablement le volume occupé par le descendeur. Le crochet transversal 6 fait saillie du plan contenant les deux anneaux et l'échancrure 4. Le crochet est configuré pour revenir en direction de l'utilisateur. De cette manière, il est possible de définir une zone de freinage additionnelle en faisant sortir le brin de corde descendant depuis le deuxième anneau 3 et en faisant passer ce brin de corde dans le crochet transversal 6.

Cette configuration est particulièrement avantageuse car elle permet de rajouter des frottements sans que l'utilisateur n'enlève sa main du brin de corde inférieur et la main inférieure reste toujours en position basse, c'est-à-dire sous l'altitude du descendeur ce qui augmente la sécurité. La modulation de la force de freinage peut être obtenue facilement en écartant la main du corps ou en la rapprochant. Si l'utilisateur écarte la main inférieure, il force le brin de corde à appuyer sur le crochet transversal 6 ce qui augmente le frottement.

Au contraire, en rapprochant la main de son corps, l'utilisateur diminue le frottement. D'autres mouvements sont possibles pour moduler la force de freinage.

De manière avantageuse, la première tige 5 est terminée par un crochet latéral 7 inclus dans le plan du premier anneau 2 et du deuxième anneau 3. Le crochet est dirigé pour s'éloigner de l'échancrure 4, c'est-à-dire vers le bas sur la figure 1.

Dans cette configuration, la première tige 5 peut être utilisée comme point d'appui pour l'utilisateur afin de freiner le brin de corde avant de l'insérer dans l'échancrure 4. Le brin de corde descendant sort du deuxième anneau 3 contourne la première tige 5 et se bloque dans l'échancrure 4. Le contournement de la première tige 5 peut se faire depuis l'arrière vers l'avant ou depuis l'avant vers l'arrière. L'avant correspond à la face qui est en vis-à-vis de l'utilisateur et l'arrière correspond à la face opposée du descendeur 1.

Il est particulièrement avantageux de prévoir que le descendeur 1 comporte une deuxième tige 8 qui est terminée par un crochet latéral 9. La deuxième tige 8 et le crochet latéral 9 sont inclus dans le plan qui contient le premier anneau 2 et le deuxième anneau 3. La deuxième tige est terminée par un crochet transversal 9, la deuxième tige 8 s'étend depuis le premier anneau 2 dans une direction opposée à la première tige 5. Le crochet est dirigé vers le deuxième anneau 3. Le crochet 9 est orienté vers le deuxième anneau 3 et remonte avantageusement au moins jusqu'à la moitié de la hauteur du premier anneau 2 pour réduire une sortie non désirée de la corde hors du crochet. De préférence, le crochet remonte jusqu'à 75% de la hauteur du premier anneau 2.

## Revendications

1. Descendeur (1) comprenant :
- un premier anneau (2) destiné à être fixé à un harnais par l'intermédiaire d'un connecteur (C),
- un deuxième anneau (3) distinct du premier anneau (2), le deuxième anneau (3) étant défini au moyen d'un périmètre fermé, le premier anneau (2) et le deuxième anneau (3) appartenant à un même plan comprenant la surface fermée du deuxième anneau (3),
- une échancrure (4) disposée hors du deuxième anneau (3) et du premier anneau (2) et à l'extérieur du périmètre fermé,
le descendeur (1) étant **caractérisé en ce que**
- l'échancrure (4) possède deux parois latérales dont la distance de séparation est variable selon une direction d'insertion d'un brin de corde, les deux parois latérales appartenant audit plan, la direction d'insertion étant orientée depuis une extrémité sommitale du deuxième anneau (3) en direction du premier anneau (2), l'échancrure (4) étant configurée pour :
∘ autoriser l'insertion d'un brin de corde sans passer dans le deuxième anneau (3),
∘ bloquer le brin de corde inséré dans l'échancrure (4) selon la direction d'insertion et
- l'échancrure (4) est configurée pour bloquer, par coincement, le brin de corde inséré dans l'échancrure (4) selon la direction d'insertion, le brin de corde étant coincé par les deux parois latérales de l'échancrure, l'échancrure (4) possédant une ouverture disposée latéralement et au-dessus du deuxième anneau (3) par rapport au sommet du descendeur.

2. Descendeur (1) selon la revendication 1, dans lequel l'échancrure (4) présente une forme de V à largeur continument décroissante depuis l'ouverture de l'échancrure (4) jusqu'à la zone de blocage.

3. Descendeur (1) selon l'une des revendications précédentes, dans lequel l'échancrure (4) est formée par une paroi latérale commune avec le deuxième anneau (3).

4. Descendeur (1) selon la revendication précédente, dans lequel la paroi latérale commune est convexe selon une direction allant de l'intérieur du deuxième anneau (3) vers l'échancrure (4).

5. Descendeur (1) selon la revendication précédente, dans lequel l'autre paroi latérale de l'échancrure (4) est convexe selon une direction allant de l'intérieur du deuxième anneau (3) vers l'échancrure (4).

6. Descendeur (1) selon l'une quelconque des revendications 4 et 5, comportant une extrémité correspondant au point le plus éloigné du premier anneau (2), l'extrémité étant disposée dans un premier demi-espace et l'ouverture de l'échancrure (4) étant disposée dans un second demi-espace, le premier demi-espace étant séparé du second demi-espace par un plan passant par le premier anneau (2) et le sommet du descendeur (1).

7. Descendeur (1) selon l'une quelconque des revendications précédentes comportant une première tige (5) en saillie terminée par un crochet transversal (6), la première tige (5) s'étendant depuis le premier anneau (2) en direction de l'échancrure (4).

8. Descendeur (1) selon la revendication précédente dans lequel, le premier anneau (2) et le deuxième anneau (3) appartiennent à un même plan comprenant la surface fermée du deuxième anneau (3), le descendeur (1) comportant la première tige (5) en saillie terminée par un crochet transversal (6), la première tige (5) s'étendant depuis le premier anneau (2) en direction de l'échancrure (4) à l'intérieur dudit plan et le crochet transversal (6) faisant saillie dudit plan.

9. Descendeur (1) selon la revendication précédente dans lequel la première tige (5) est terminée par un crochet latéral (7) inclus dans ledit plan et dirigé pour s'éloigner de l'échancrure (4).

10. Descendeur (1) selon l'une quelconque des revendications 7 à 9, comportant une deuxième tige (8) terminée par un crochet latéral (9) inclus dans ledit plan, la deuxième tige (8) s'étendant depuis le premier anneau (2) dans une direction opposée à la première tige (5) à l'intérieur dudit plan et le crochet latéral (9) étant refermé vers le deuxième anneau (3).

## Patentansprüche

1. Abseilgerät (1), umfassend:
- einen ersten Ring (2), der dazu bestimmt ist, über einen Verbinder (C) an ein Klettergeschirr befestigt zu werden,
- einen zweiten Ring (3), der vom ersten Ring (2) getrennt ist, wobei der zweite Ring (3) durch einen geschlossenen Umfang definiert wird, wobei der erste Ring (2) und der zweite Ring (3) in einer selben Ebene liegen, die die geschlossene Fläche des zweiten Rings (3) enthält,
- eine Einbuchtung (4), die außerhalb des zweiten Rings (3) und des ersten Rings (2) und außerhalb des geschlossenen Umfangs angeordnet ist,
wobei das Abseilgerät (1) **dadurch gekennzeichnet ist, dass**
- die Einbuchtung (4) zwei Seitenwände aufweist, deren Trennungsabstand entlang einer Einführrichtung eines Seilstrangs unterschiedlich ist, wobei die zwei Seitenwände in der besagten Ebene liegen, wobei die Einführrichtung von einem Scheitelende des zweiten Rings (3) zum ersten Ring (2) hin gerichtet ist, wobei die Einbuchtung (4) dazu konfiguriert ist:
o das Einführen eines Seilstrangs zulassen, ohne durch den zweiten Ring (3) zu gehen,
∘ den in die Einbuchtung (4) eingeführten Seilstrang in der Einführrichtung zu blockieren, und
- die Einbuchtung (4) dazu konfiguriert ist, den in die Einbuchtung (4) eingeführten Seilstrang entlang der Einführrichtung durch Einklemmen zu blockieren, wobei der Seilstrang durch die zwei Seitenwände der Einbuchtung eingeklemmt wird, wobei die Einbuchtung (4) eine Öffnung aufweist, die in Bezug auf die Oberseite des Abseilgeräts seitlich und oberhalb des zweiten Rings (3) angeordnet ist.

2. Abseilgerät (1) nach Anspruch 1, wobei die Einbuchtung (4) eine V-Form aufweist, deren Breite von der Öffnung der Einbuchtung (4) bis zum Blockierbereich kontinuierlich abnimmt.

3. Abseilgerät (1) nach einem der vorherigen Ansprüche, wobei die Einbuchtung (4) durch eine mit dem zweiten Ring (3) gemeinsame Seitenwand gebildet wird.

4. Abseilgerät (1) nach dem vorherigen Anspruch, wobei die gemeinsame Seitenwand entlang einer Richtung von der Innenseite des zweiten Rings (3) zur Einbuchtung (4) hin konvex ist.

5. Abseilgerät (1) nach dem vorherigen Anspruch, wobei die andere Seitenwand der Einbuchtung (4) in einer Richtung von der Innenseite des zweiten Rings (3) zur Einbuchtung (4) hin konvex ist.

6. Abseilgerät (1) nach einem der Ansprüche 4 oder 5, mit einem Ende, das dem Punkt entspricht, der am weitesten vom ersten Ring (2) entfernt ist, wobei das Ende in einem ersten Halbraum angeordnet ist und die Öffnung der Einbuchtung (4) in einem zweiten Halbraum angeordnet ist, wobei der erste Halbraum durch eine Ebene, die durch den ersten Ring (2) und den Scheitelpunkt des Abseilgeräts (1) verläuft, vom zweiten Halbraum getrennt ist.

7. Abseilgerät (1) nach einem der vorherigen Ansprüche, mit einem ersten vorstehenden Schaft (5), der in einem Querhaken (6) endet, wobei der erste Schaft (5) sich vom ersten Ring (2) in Richtung der Einbuchtung (4) erstreckt.

8. Abseilgerät (1) nach dem vorherigen Anspruch, wobei der erste Ring (2) und der zweite Ring (3) in einer selben Ebene liegen, die die geschlossene Fläche des zweiten Rings (3) enthält, wobei das Abseilgerät (1) den ersten vorstehenden Schaft (5) umfasst, der in einem Querhaken (6) endet, wobei der erste Schaft (5) sich in der besagten Ebene vom ersten Ring (2) in Richtung der Einbuchtung (4) erstreckt und der Querhaken (6) aus dieser Ebene vorsteht.

9. Abseilgerät (1) nach dem vorherigen Anspruch, wobei der erste Schaft (5) in einem Seitenhaken (7) endet, der in der Ebene enthalten ist und von der Einbuchtung (4) weg gerichtet ist.

10. Abseilgerät (1) nach einem der Ansprüche 7 bis 9, mit einem zweiten Schaft (8), der in einem Seitenhaken (9) endet, der in der Ebene enthalten ist, wobei der zweite Schaft (8) sich in der besagten Ebene vom ersten Ring (2) in einer dem ersten Schaft (5) entgegengesetzten Richtung erstreckt und der Seitenhaken (9) zum zweiten Ring (3) hin geschlossen ist.

## Claims

1. A descender (1) comprising:
- a first ring (2) designed to be attached to a harness via a connector (C),
- a second ring (3) distinct from the first ring (2), the second ring (3) being defined by means of a closed perimeter, the first ring (2) and the second ring (3) belonging to a same plane comprising the closed surface of the second ring (3),
- a cutout (4) disposed outside the second ring (3) and the first ring (2) and outside the closed perimeter,
the descender (1) being **characterized in that**
- the cutout (4) has two side walls whose separation distance is variable along a direction of insertion of a strand of rope, the two side walls belonging to said plane, the direction of insertion being oriented from a top end of the second ring (3) towards the first ring (2), the cutout (4) being configured to :
∘ allow a strand of rope to be inserted without passing through the second ring (3),
∘ block the strand of rope inserted in the cutout (4) in the direction of insertion and
- the cutout (4) is configured to block, by wedging, the strand of rope inserted into the cutout (4) in the insertion direction, the strand of rope being wedged by the two side walls of the cutout, the cutout (4) having an opening arranged laterally and above the second ring (3) with respect to the top of the descender.

2. The descender (1) according to claim 1, wherein the cutout (4) is V-shaped with continuously decreasing width from the opening of the cutout (4) to the blocking area.

3. The descender (1) according to any of the preceding claims, wherein the cutout (4) is formed by a side wall common with the second ring (3).

4. The descender (1) according to the preceding claim, wherein the common side wall is convex along a direction from the inside of the second ring (3) towards the cutout (4).

5. The descender (1) according to the preceding claim, wherein the other side wall of the cutout (4) is convex along a direction from the inside of the second ring (3) towards the cutout (4).

6. The descender (1) according to any one of claims 4 and 5, having an end corresponding to the furthest point from the first ring (2), the end being disposed in a first half-space and the opening of the cutout (4) being disposed in a second half-space, the first half-space being separated from the second half-space by a plane passing through the first ring (2) and the top of the descender (1).

7. The descender (1) according to any one of the preceding claims comprising a protruding first stem (5) terminated by a transverse hook (6), the first stem (5) extending from the first ring (2) towards the cutout (4).

8. The descender (1) according to the preceding claim wherein the first ring (2) and the second ring (3) belong to a same plane comprising the closed surface of the second ring (3), the descender (1) comprising the protruding first stem (5) terminated by a transverse hook (6), the first stem (5) extending from the first ring (2) in the direction of the cutout (4) inside said plane and the transverse hook (6) projecting from said plane.

9. The descender (1) according to the preceding claim wherein the first stem (5) is terminated by a lateral hook (7) included in said plane and directed away from the cutout (4).

10. The descender (1) according to any one of claims 7 to 9, comprising a second stem (8) terminated by a lateral hook (9) included in said plane, the second stem (8) extending from the first ring (2) in a direction opposite to the first stem (5) within said plane and the lateral hook (9) being closed towards the second ring (3).
